Europäisches Patentamt

European Patent Office

Office européen des brevets

(11) Publication number: **0 317 339**
**A2**

## (12) EUROPEAN PATENT APPLICATION

(21) Application number: **88310914.2**

(22) Date of filing: **18.11.88**

(51) Int. Cl.⁴: **G 01 N 23/00**
**G 01 N 17/00**

(30) Priority: **18.11.87 NO 874815**

(43) Date of publication of application:
**24.05.89 Bulletin 89/21**

(84) Designated Contracting States: **DE FR GB NL SE**

(71) Applicant: **INSTITUTT FOR ENERGITEKNIKK**
**P.O. Box 40**
**N-2007 Kjeller (NO)**

(72) Inventor: **Dugstad, Arne**
**Rodbergveien 27**
**N-0591 Oslo 5 (NO)**

**Videm, Ketil**
**Fagerborggt. 30**
**N-0360 Oslo 3 (NO)**

(74) Representative: **Purvis, William Michael Cameron et al**
**D. Young & Co. 10 Staple Inn**
**London WC1V 7RD (GB)**

(54) **Method and apparatus for gauging material loss due to corrosion and/or erosion.**

(57) A method and an apparatus for gauging the amounts of material which are lost due to corrosion and/or erosion in the course of a determined period of time, utilise a piece of material (1) which has previously been made radioactive, and a radiation intensity meter (3, 4) disposed at a measuring site a fixed distance from said piece of material for measuring the radioactive radiation from said piece both at the beginning and at the end of said period of time. Each of said measurements is calibrated by means of a further radiation source (6) disposed for controllably adopting either a most radiation screened position or alternatively a least screened position with respect to a radiation screen (2) and thereby providing a known radiation intensity at the measuring site in both positions. The least radiation screened position preferably provides complete unscreened radiation intensity at the measuring site, whereas the most screened position provides negligible radiation intensity at said site. The measuring results in the two positions are mutually compared in order to deduce the contribution of said piece of material (1) to the combined radiation source. The further radiation source is then constituted by a calibration member (6) composed of the same material as the piece of material (1) which is exposed to corrosion and/or erosion, the calibration member being radioactivated at the same time and by the same activation process as said piece (1). The calibration member (6) is preferably dimensioned to provide at all time the same radiation intensity at the measuring site as a predetermined material loss from said piece of material (1), e.g. a prefixed thickness reduction of the same.

Fig 2

Fig 3

**Description**

## METHOD AND APPARATUS FOR GAUGING MATERIAL LOSS DUE TO CORROSION AND/OR EROSION

The invention relates to a method and an apparatus for gauging material loss due to corrosion and/or erosion during a determined period of time.

By measuring the extent of corrosion and/or erosion attack in relation to various external conditions, the decomposition rate of the materials in question can be gauged. The invention has particular but not exclusive application to corrosion measurements at difficult accessible locations, e.g. accurate measurements of internal attack on subsea oil and gas pipelines over the course of a very long time. The invention is based on a measurement procedure wherein a representative portion of the material in question is made radioactive, and progress of the corrosion and/or erosion is measured by means of equipment capable of gauging and recording the level of radioactive radiation adjacent the activated material, as the material loss due to corrosion or erosion would lead to a corresponding reduction of the radiation intensity. This principle is well known per se and has been used in practice for several years.

Such measurement of the radiation intensity is, however, associated with two basic uncertainties. Once of these is due to the fact that radioactive decay of atomic nuclei is a process which can be determined only statistically, as the radiation intensity may exhibit arbitrary variations. This uncertainty may be reduced by counting a great number of the emitted energy pulses during the decay process. The other uncertainty concerns unintentional changes of the properties of the measuring equipment e.g. due to temperature variations and age. Experience shows that the last mentioned uncertainty may considerably reduce the accuracy of the measurement. This disadvantage may be overcome to some extent by maintaining the measuring equipment at constant temperature and by taking the equipment to a calibration station at suitable intervals. However, these measures are not practically feasible if the equipment is inaccessibly located. Even in cases where the measuring equipment is reasonably accessible, it would be a great advantage to avoid external interference therewith, as even minor structural changes of the equipment may cause major errors.

According to one aspect of the invention there is provided a method for gauging material loss due to corrosion and/or erosion, during a determined period of time, from a given piece of material which has previously been made radioactive, the material loss being determined by measuring the intensity of the radioactive radiation from said piece of material by means of a radiation intensity meter at a measuring site a fixed distance from said piece, both at the beginning and at the end of said period of time, characterised in that each of the measurements is calibrated by disposing a further radiation source for controllably adopting either a more radiation screened position or alternatively a less radiation screened position with respect to a radiation screen and thereby providing a known radiation intensity at the measuring site in both positions, the combined radiation intensity from both of said piece of material and the further radiation source being measured in the two positions by means of the radiation intensity meter at the measuring site, and the results of the measurements being subsequently compared in order to deduce the contribution of said piece of material to the combined radiation intensity in proportion to the known contribution of the radiation source.

According to another aspect of the invention there is provided apparatus for gauging material loss due to corrosion and/or erosion, during a determined period of time, from a given piece of material which has previously been made radioactive, the apparatus comprising a radiation intensity meter disposed at a measuring site a fixed distance from said piece of material to measure the radioactive radiation from said piece both at the beginning and at the end of said period of time, characterised in that the apparatus, for the purpose of calibrating the measurements, also comprises a further radiation source and a radiation screen, the further radiation source being disposed for controlled location in either a more radiation screened position or a less radiation screened position with respect to the radiation screen thereby to provide a known radiation at the measuring site in both positions, and comparison means operative to compare the combined radiations detected by the intensity meter at the measuring site in the two positions, for the purpose of deducing the contribution of said piece of material to the combined radiation in proportion to the known contribution of the radiation source.

Such a method and apparatus can achieve easy calibration of measuring equipment for radioactive radiation, without requiring access to or interference with such equipment and with minimum internal modification of the equipment during the calibration process.

The further radiation source preferably comprises a calibration member of the same material under investigation, the member being radioactivated at the same time and by the same activation process as said piece. Said calibration member is then preferably dimensioned to provide at all times the same radiation intensity at said measuring site as a predetermined material loss from said piece of material, e.g. a prefixed thickness reduction of the same.

When performing the method according to said one aspect of the invention in practice, the further radiation source is preferably disposed in such a manner that said less screened position provides complete, unscreened radiation intensity at the measuring site, and the more screened position provides negligible radiation intensity at the measuring site.

With appropriate choice of the radiation level for both the radioactive piece of material and the further radiation source, the statistical uncertainty may be brought down to very low values. By counting $10^8$ energy pulses per hour the statistical uncertainty is about 0.01% with a counting period of one hour. Thus, if the detected thickness reduction of the radioactive piece of material due to corrosion and/or erosion amounts to e.g. 1 mm, the corresponding statistical uncertainty would be 0.0001 mm.

In the apparatus according to said another aspect of the invention the further radiation source is preferably disposed to be moved between the more radiation screened position with respect to the radiation screen, which is stationary, by means of manually or remotely controlled guiding means.

The apparatus is preferably structured in such a way that the radiation screen encloses the measuring site except for an open radiation path towards said piece of material which is exposed to corrosion and/or erosion, and the further radiation source is disposed to be moved by the guiding means between an unscreened position in the radiation path and a screened position in a recess in the radiation screen.

As mentioned above, even minor structural changes of the apparatus may effect substantial deviations in the measured value. Thus the apparatus as a whole must exhibit a very high degree of mechanical stability, and both the alternative positions of the calibration member must be well defined during the whole operative life of the apparatus. Modern measuring equipment renders sufficiently accurate measurements feasible during a long operational span of time, e.g. about 30 years.

As to the radioactivation of the piece of material, the corrosion and/or erosion of which is to be measured, many possibilities are available. Thus, it has been found that ordinary steel as well as nickel and copper alloy contain sufficient cobalt contaminants to produce upon neutron radiation the isotype cobalt 60 with a halflife of about 5 years in an amount adequate for measurements over a time span of 30 years.

An embodiment of the invention is diagrammatically illustrated by way of example in the accompanying drawings, in which:

Figure 1 shows a pipeline for transport of gas or oil and provided with apparatus according to the invention for measuring the corrosion rate of the pipe material;

Figure 2 shows enlarged a section through the measuring and calibration equipment illustrated in Figure 1;

Figure 3 shows a cross-section taken on line A-A in Figure 2; and

Figure 4 is a block diagram showing schematically the implementation of the measuring and calibration apparatus according to the invention.

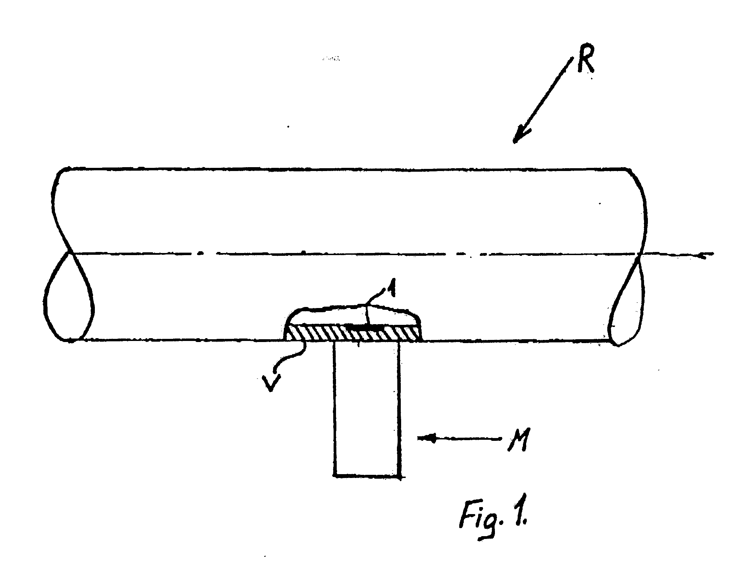

In Fig. 1 a pipeline R is shown for transport of gas or condensate from a production field. A piece of steel of the same quality as the material in the pipeline is irradiated by neutrons in a nuclear reactor and then welded flush with the inner wall surface of the pipeline R, as illustrated by a cut-away portion of the pipe wall V in Fig. 1. The radioactive isotope which is used in the present case is $Co^{60}$ with a halflife of 5.7 years and a gamma radiation energy of 1.17 MeV.

It is found that ordinary steel contains sufficient cobalt contaminants for neutron irradiation to produce an adequate amount of activated $Co^{60}$ to be used for measurements of the present kind. Immediately after taking the irradiated piece of steel out of the reactor, $Fe^{59}$ having a halflife of 40 days and gamma energies of 1.10 and 1.29 MeV will be the dominating radioactive isotope. $Fe^{59}$ is then well suited for corrosion measurements over a short period of time, but in the present exemplified embodiment, where the intended application is to gauge material loss due to corrosion in the course of several years, it is more appropriate to utilise $Co^{60}$. In order to obtain a suitable isotope activity for this purpose, the irradiation of the steel piece in question must take place a long time before the intended use, in order that the major part of the radioactivity due to $Fe^{59}$ and other isotopes with short life may disappear.

From laboratory tests and theoretical calculations it is expected in the present case that the steel material of the pipeline would corrode at a rate of the order of magnitude of 0.2 mm/year, which means a thickness reduction of 4 mm in the course of 20 years. A steel piece with a thickness of 6 mm and induced radioactive $Co^{60}$ is then considered a suitable test piece for the present purpose. Such an activated piece of material 1 is thus welded into the wall V of the pipeline, as indicated in Fig. 1. The pipe is 18 mm thick in the present example. As the weld per se may not corrode in the same manner as the steel pipeline itself, the steel piece 1 for the present corrosion measurements is not made radioactive all the way to its outer edge, which is achieved by shielding the edges of th steel piece during the neutron irradiation in the reactor.

The accuracy of radioactive radiation measurement is dependent of the intensity of the radiation. The statistical uncertainty which is due to the fact that the instant of time when a radioactive atomic nucleus is disintegrated is not predictable, is reduced in proportion to the square root of the counted radiation pulses. If e.g. $10^8$ pulses are counted, the statistical uncertainty would be $10^{-4}$ or 0.01%. Thus, if measurement of the corrosion rate is intended on the basis of a ten hours counting period in the present case, and the induced radioactivity provided $10^8$ pulses in the course of this period, the statistical uncertainty of 0.01% would then correspond to 0.005 mm with a 5 mm thick steel piece, which is considered to be a sufficient accuracy for the present purpose. The necessary activation level of the test piece is dependent of the counting efficiency of the counter means. Also the fact that the pipeline wall is shielding the gamma radiation, so that the radiation level is reduced outside the pipeline, must be taken into due consideration.

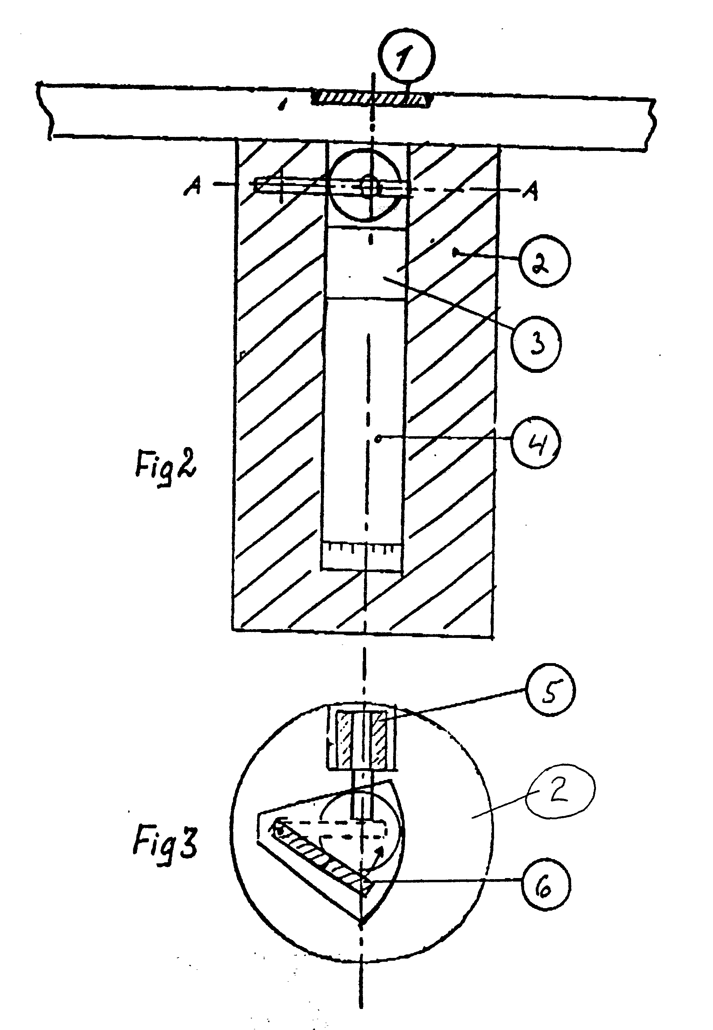

The implementation of the measuring and calibration equipment is shown in more detail in Figs. 2 and 3. As illustrated in Fig. 2, a radiation screen 2 of lead is positioned just opposite the radioactive steel piece 1 which is welded into the pipeline wall V, the screen 2 enclosing a scintillation crystal 3 and a photo-multiplier diode 4, both of which are only shown schematically as such components are well known in the art. Between the detector crystal 3 and the pipeline wall V a movable radioactive calibration member 6 is disposed inside the lead screen 2 for movement, by means of an electromagnet 5 included in the screen 2, between a screened position in a recess in the side wall of the radiation screen and an unscreened prominent position within the screen, i.e. in the radiation path between the test piece 1 and the scintillation crystal 3. A calibration process which is performed by means of the radioactive calibration member 6, is described below in further detail.

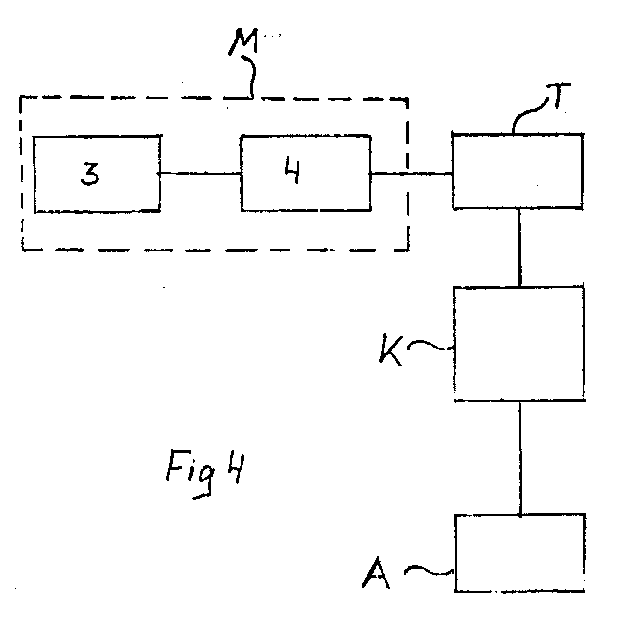

In the present case the crystal $Bi_4 Ge_{12}$ (BGO) is preferred as the scintillation crystal 3. The reason for selecting BGO instead of NaI, which normally is used, is that BGO is expected to provide more stable measurments over longer periods of time and is less influenced by temperature variations. The measuring equipment within the radiation screen 2 further comprises the photomultiplier 4, which amplifies the energy pulses from the detector crystal. The photomultiplier transfers in turn the pulses to counter means T outside the radiation screen, as illustrated in further detail by the block diagram of Fig. 4. Both the photomultiplier 4 and the counter means T are supplied with power from stabilised voltage sources (not shown). As radioactive products may appear in the product flow inside the pipeline R, but hardly $Co^{60}$, and also the surroundings may produce a certain amount of radiation which possibly may penetrate the radiation screen, a separation of the radiation from $Co^{60}$ in the test piece from other radioactive radiation is required. Thus, the counter means T is implemented as a pulse height selective counter provided with a pulse energy window between 0.95 and 1.3 MeV, which therefore is operative to receive selectively the radiation from $Co^{60}$ with a gamma energy of 1.17 MeV.

The apparatus can provide a calibration of each radiation intensity measurement taken during longterm operation (up to 30 years) without access to the measuring equipment inside the radiation screen. For this purpose the calibration member 6 is formed of the very same material as the steel piece 1 which is welded to the inner surface of the pipeline R and exposed to the same corrosion as the rest of the pipeline. The calibration member 6 is made radioactive at the same time as the test piece of steel and by means of the same activation procedure.

Furthermore, the calibration member 6 is dimensioned to provide at all times the same radiation intensity at the measuring site as a predetermined material loss of the test piece, e.g. a radiation corresponding to a thickness reduction of 0.1 mm. As the steel piece 1 and the calibration member are radioactivated at the same time, and the same isotope $Co^{60}$ with the same halflife is utilised both for measurements and calibration, the radiation from the calibration member 6 will at all times during the operation in question correspond to the same thickness reduction of the steel piece 1 which is exposed to corrosion.

With each gauging of the thickness of the test piece 1, the radiation from the test piece alone is measured in a first measuring step, during which the calibration member 6 is withdrawn into its recess in the radiation screen wall. By means of the electromagnet 5 the calibration member 6 is then tilted out of the recess into the unscreened position in front of the detector crystal 3. Thereafter, in a second measuring step the combined radiation from both the test piece 1 and the calibration member 6 is measured by means of the detector crystal 3 and the photomultiplier 4. The increase of the radiation level which then is detected corresponds exactly to the material thickness of 0.1 mm indicated above, and by comparing this intensity increase with the measured radiation intensity from the test piece 1 alone, e.g. by means of a comparator K shown in Fig. 4, the present material thickness may easily be deduced. The result of the comparison is then suitably transferred to an indication unit A for reading and/or recording.

The described calibration procedure may readily be performed at any time without access to the measuring equipment 3,4 within the lead screen 2 and by remote control of the magnet 5 to pull the calibration member 6 out of its recess in the wall of the lead screen into abutment with the armature of the electromagnet when exciting the same, and then allow the calibration member to drop back into the recess by interrupting the magnetising current. This is illustrated in Fig. 3. The remote control could be effected by other means, e.g. pneumatically or hydraulically by suitable equipment for such purposes mounted on the radiation screen 2. With such remotely controlled and maintenance-free measuring and calibration, reliable measuring results may be obtained during longtime operation, as indicated above. The corrosion rate over a determined time span may then easily be deduced from accurate measurements taken at the beginning and the end, respectively, of the time span in question.

## Claims

1. A method for gauging material loss due to corrosion and/or erosion, during a determined period of time, from a given piece of material (1) which has previously been made radioactive, the material loss being determined by measuring the intensity of the radioactive radiation from said piece of material (1) by means of a radiation intensity meter (3, 4) at a measuring site a fixed distance from said piece, both at the beginning and at the end of said period of time, characterised in that each of the measurements is calibrated by disposing a further radiation source (6) for controllably adopting either a more radiation screened position or alternatively a less radiation screened position with respect to a radiation screen (2) and thereby providing a known radiation intensity at the measuring site in both positions, the combined radiation intensity from both said piece of material (1) and the further radiation source (6) being measured in the two positions by means of the radiation intensity meter (3, 4) at the measuring site, and the results of the measurements being subsequently compared in order to deduce the contribution of said piece of material (1) to the combined radiation intensity in proportion to the known contribution of the radiation source (6).

2. A method as claimed in claim 1, in which a calibration member (6) is utilised as the further radiation source for the calibration, the calibration member (6) is composed of the same material as said piece of material (1) which is exposed to corrosion and/or erosion, and the calibration member (6) is made radioactive· at the same time as said piece of material (1) and by means of the same activation process.

3. A method as claimed in claim 2, in which the calibration member (6) is dimensioned to provide at all times the same radiation intensity at said measuring site as a predetermined material loss from said piece of material (1) and by means of the same activation process.

4. A method as claimed in any one of claims 1 to 3, in which the further radiation source (6) is disposed in such a manner that said less radiation screened position provides complete, unscreened radiation intensity at the measuring site , and the more radiation screened position provides negligible radiation intensity at the measuring site.

5. A method as claimed in any one of claims 1 to 4, in which the further radiation source (6) is moved between the more radiation screened position and the less radiation screened position with respect to a stationary radiation screen (2) by means of a manually or remotely controlled guiding means (5).

6. Apparatus for gauging material loss due to corrosion and/or erosion, during a determined period of time, from a given piece of material (1) which has previously been made radioactive, the apparatus comprising a radiation intensity meter (3, 4) disposed at a measuring site a fixed distance from said piece of material (1) to measure the radioactive radiation from said piece both at the beginning and at the end of said period of time, characterised in that the apparatus, for the purpose of calibrating the measurments, also comprises a further radiation source (6) and a radiation screen (2), the further radiation source (6) being disposed for controlled location in either a more radiation screened position or a less radiation screened position with respect to the radiation screen (2) thereby to provide a known radiation at the measuring site in both positions, and comparison means (K) operative to compare the combined radiations detected by the intensity meter (3, 4) at the measuring site in the two positions, for the purpose of deducing the contribution of said piece of material (1) to the combined radiation in proportion to the known contribution of the radiation source (6).

7. Apparatus as claimed in claim 6, in which the further radiation source comprises a calibration member (6) composed of the same material as said piece of material (1) which is exposed to corrosion and/or erosion, the calibration member being radioactivated at the same time and by the same activation process as said piece of material.

8. Apparatus as claimed in claim 7, in which the calibration member is dimensioned to provide at all times the same radiation intensity as said measuring site as a predetermined material loss from said piece of material (1), e.g. by a prefixed thickness reduction of the same.

9. Apparatus as claimed in any one of claims 6 to 8, in which the further radiation source (6) is disposed in such a manner that said less radiation screened position provides complete unscreened radiation intensity at the measuring site, whereas the more radiation screened position provides negligible radiation intensity at said site.

10. Apparatus as claimed in any one of claims 6 to 9, in which the further radiation source (6) is disposed to be moved between the more radiation screened position and the less radiation screened position with respect to the radiation screen (2), which is stationary, by means of manually or remotely controlled guiding means (5).

11. Apparatus as claimed in claim 10, in which the radiation screen (2) encloses the measuring site except for an open radiation path towards said piece of material (1) which is exposed to corrosion and/or erosion, and the further radiation source (6) is disposed to be moved by the guiding means (5) between an unscreened position in the radiation path and a screened position in a recess in the radiation screen (2).

Fig. 1.

Fig 2

Fig 3

Fig 4